# EUROPEAN PATENT APPLICATION

(11) **EP 0 780 429 A1**
(43) Date of publication of application: **25.06.1997**
(21) Application number: 96119679.7
(22) Date of filing: 09.12.1996
(51) Int. Cl.: C08K 5/372, C08L 21/00

(54) **Silica-filled rubber compositions containing a mixture of dithiodipropionic acid, trithiodipropionic acid and tetrethiodipropionic acid**

(30) Priority: 20.12.1995 US 575427
(71) Applicant: THE GOODYEAR TIRE & RUBBER COMPANY, Akron, Ohio 44316-0001 (US)
(72) Inventor: Wideman, Lawson Gibson, Tallmadge, Ohio 44278 (US); Sandstrom, Paul Harry, Tallmadge, Ohio 44278 (US)
(74) Representative: Leitz, Paul

(57) **Abstract**

A method is disclosed for improving the physical properties of a silica-filled rubber composition which comprises mixing
(i) 100 parts by weight of at least one sulfur vulcanizable elastomer selected from conjugated diene homopolymers and copolymers, natural rubber and copolymers of at least one conjugated diene and aromatic vinyl compound;
(ii) 10 to 250 phr of silica; and
(iii) .05 to 10 phr of a mixture of dithiodipropionic acid, trithiodipropionic acid and tetrathiodipropionic acid.
Addition of the mixture of dithiodipropionic acid, trithiodipropionic acid and tetrathiodipropionic acid to silica-reinforced sulfur vulcanizable rubber improves the vulcanizate properties.

## Description

### Field of the Invention

The present invention relates to a silica-filled rubber composition containing a mixture of dithiodipropionic acid, trithiodipropionic acid and tetrathiodipropionic acid and a process for improving the physical properties of a silica-filled rubber composition.

### Background of the Invention

For various applications utilizing rubber which retires high strength and abrasion resistance, particularly applications such as tires and various industrial products, sulfur cured rubber is utilized which contains substantial amounts of reinforcing fillers. Carbon black is commonly used for such purpose and normally provides or enhances good physical properties for the sulfur cured rubber. Particulate silica is also often used for such purpose, particularly when the silica is used in conjunction with a coupling agent. In some cases, a combination of silica and carbon black is utilized for reinforcing fillers for various rubber products, including treads for tires.

It is important to appreciate that, conventionally, carbon black is a considerably more effective reinforcing filler for rubber products, and particularly for rubber tire treads than silica if the silica is used without a coupling agent, or silica coupler as it may be sometimes referred to herein.

Indeed, at least as compared to carbon black, there tends to be a lack of, or at least an insufficient degree of, physical and/or chemical bonding between the silica particles and the rubber elastomers to enable the silica to become a sufficient reinforcing filler for the rubber for most purposes, including tire treads, if the silica is used without a coupler. While various treatments and procedures have been devised to overcome such deficiencies compounds capable of reacting with both the silica surface and the rubber elastomer molecule, generally known to those skilled in such art as coupling agents, are often used. Such coupling agents may, for example, be premixed, or pre-reacted, with the silica particles or added to the rubber mix during the rubber/silica processing, or mixing, stage. If the coupling agent and silica are added separately to the rubber mix during the rubber/silica mixing, or processing stage, it is considered that the coupling agent then combines in situ with the silica.

In particular, such coupling agents are generally composed of a silane which has a constituent component, or moiety, (the silane portion) capable of reacting with the silica surface and, also, a constituent component, or moiety, capable of reacting with the rubber, particularly a sulfur vulcanizable rubber which contains carbon-to-carbon double bonds, or unsaturation. In this manner, then the coupler acts as a connecting bridge between the silica and the rubber and thereby enhances the rubber reinforcement aspect of the silica.

In one aspect, the silane of the coupling agent apparently forms a bond to the silica surface, possibly through hydrolysis, and the rubber reactive component of the coupling agent combines with the rubber itself. Usually the rubber reactive component of the coupler is temperature sensitive and tends to combine with the rubber during the final and higher temperature sulfur vulcanization stage and, thus, subsequent to the rubber/silica/coupler mixing stage and, therefore, after the silane group of the coupler has combined with the silica. However, partly because of typical temperature sensitivity of the coupler, some degree of combination, or bonding, may occur between the rubber-reactive component of the coupler and the rubber during an initial rubber/silica/coupler mixing stages and, thus, prior to a subsequent vulcanization stage.

The rubber-reactive group component of the coupler may be, for example, one or more of groups such as mercapto, amino, vinyl, epoxy, and sulfur groups, preferably a sulfur or mercapto moiety and more preferably sulfur.

Numerous coupling agents are taught for use in combining silica and rubber, such as, for example, silane coupling agents containing a polysulfide component, or structure, such as bis-(3-triethoxysilylpropyl)tetrasulfide and/or polyisoprene rubber together with a mixture of silica and carbon black, with silica being required to be a major component of the silica/carbon black reinforcing filler.

Other U.S. patents relating to silicas and silica reinforced tire treads include U.S. Patents Nos. 3,451,458; 3,664,403; 3,768,537; 3,884,285; 3,938,574; 4,482,663; 4,590,052; 5,089,554 and British 1,424,503.

U.S. Patent No. 4,513,123 discloses a rubber composition containing dithiodipropionic acid, natural rubber, or blends of natural and synthetic rubbers, 30-80 parts carbon black, sulfur and organo-cobalt compound for use as skim stock for brass-plated steel. The rubber composition can contain other additives such as fillers such as clays, silicas or calcium carbonate, process and extender oils, antioxidants, cure accelerators, cure activators, cure stabilizers and the like.

U.S. Patent 5,328,949 discloses a rubber composition containing an elastomer, silica and a silica coupler comprised of dithiodipropionic acid.

U.S. Patent 5,130,363 discloses a method for improving the hysteresis behavior of rubber vulcanizate by using carboxyalkyl oligosulfides. One example of a carboxyalkyl oligosulfide that is disclosed is tetrathiodipropionic acid.

U.S. Patent 5,227,425 teaches a thermomechanical working of a sulfur vulcanizable rubber composition containing 30 to 150 phr of silica. The thermomechanical step comprises reaching a temperature of between 130°C to 180°C for a time period between 10 seconds to 20 minutes followed by addition of the vulcanization system at a lower temperature. It is believed that the thermal treatment during mixing promotes the sulfur linkages in the sulfur containing organosilicon compound to cleave forming bonds to the rubber and concomitant reaction of the alkoxy groups with the silica.

### Summary of the Invention

The present invention relates to the use of silica and mixture of dithiodipropionic acid, trithiodipropionic acid and tetrathiodipropionic acid in a sulfur vulcanizable elastomer.

### Detailed Description of the Invention

There is disclosed a method for improving the physical properties of a silica-filled rubber composition which comprises mixing
(i) 100 parts by weight of at least one sulfur vulcanizable elastomer selected from conjugated diene homopolymers and copolymers, natural rubber, and from copolymers of at least one conjugated diene and aromatic vinyl compound and
(ii) 10 to 250 phr of silica with
(iii) .05 to 10 phr of a mixture of dithiodipropionic acid, trithiodipropionic acid and tetrathiodipropionic acid.

There is also disclosed a sulfur vulcanizable rubber composition comprising a sulfur-vulcanizable elastomer, silica and a mixture of dithiodipropionic acid, trithiodipropionic acid and tetrathiodipropionic acid.

The present invention may be used to process sulfur vulcanizable rubbers or elastomers containing olefinic unsaturation. The phrase "rubber or elastomer containing olefinic unsaturation" is intended to include both natural rubber and its various raw and reclaim forms as well as various synthetic rubbers. In the description of this invention, the terms "rubber" and " elastomer" may be used interchangeably, unless otherwise prescribed. The terms "rubber composition", "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. The preferred rubber or elastomers are polybutadiene and SBR.

In one aspect the rubber is preferably of at least two diene-based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of about 20 to about 28 percent bound styrene or, for some applications, an E-SBR having a medium to relatively high bound styrene content, namely, a bound styrene content of about 30 to about 45 percent.

The relatively high styrene content of about 30 to about 45 for the E-SBR can be considered beneficial for a purpose of enhancing traction, or skid resistance, of the tire tread. The presence of the E-SBR itself is considered beneficial for a purpose of enhancing processability of the uncured elastomer composition mixture, especially in comparison to a utilization of a solution polymerization prepared SBR (S-SBR).

By emulsion polymerization prepared E-SBR, it is meant that styrene and 1,3-butadiene are copolymerized as an aqueous emulsion. Such are well known to those skilled in such art. The bound styrene content can vary, for example, from about 5 to about 50%. In one aspect, the E-SBR may also contain acrylonitrile to form a terpolymer rubber, as E-SBAR, in amounts, for example, of about 2 to about 30 weight percent bound acrylonitrile in the terpolymer.

Emulsion polymerized styrene/butadiene/acrylonitrile copolymer rubbers containing about 2 to about 40 weight percent bound acrylonitrile in the copolymer are also contemplated as diene based rubbers for use in this invention.

The solution polymerized styrene/butadiene rubber (S-SBR) typically has a bound styrene content in a range of about 5 to about 50, preferably about 9 to about 36, percent. The S-SBR can be conveniently prepared, for example, by organo lithium catalyzation in the presence of an organic hydrocarbon solvent.

A purpose of using S-SBR is for improved tire rolling resistance as a result of lower hysteresis when it is used in a tire tread composition.

The 3,4-polyisoprene rubber (3,4-PI) is considered beneficial for a purpose of enhancing the tire's traction when it is used in a tire tread composition. The 3,4-PI and use thereof is more fully described in U.S. Patent No. 5,087,668 which is incorporated herein by reference. The Tg refers to the glass transition temperature which can be determined by a differential scanning calorimeter at a heating rate of 10°C per minute.

The cis 1,4-polybutadiene rubber (BR) is considered to be beneficial for a purpose of enhancing the tire tread's wear, or treadwear. Such BR can be prepared, for example, by organic solution polymerization of 1,3-butadiene. The BR may be conveniently characterized, for example, by having at least a 90% cis 1,4-content.

The cis 1,4-polyisoprene and cis 1,4-polyisoprene natural rubber are well known to those having skill in the rubber art.

The term "phr" as used herein, and according to conventional practice, refers to "parts by weight of a respective material per 100 parts by weight of rubber, or elastomer."

The respective weight percentages of the mixtures of dithiodipropionic acid, trithiodipropionic acid and tetrathiodipropionic acid may vary. Generally speaking, the relative weight percentages of the components are from 50 to 80 percent by weight of dithiodipropionic acid, from 10 to 30 percent by weight of trithiodipropionic acid and from 5 to 20 percent by weight of tetrathiodipropionic acid, with all of the relative weight percentages totalling 100 percent by weight. Preferably, the relative weight percentages are from 65 to 75 percent by weight of dithiodipropionic acid, from 15 to 25 percent by weight of trithiodipropionic acid and from 10 to 15 percent by weight of tetrathiodipropionic acid.

The mixture of dithiodipropionic acid, trithiodipropionic acid and tetrathiodipropionic acid used in the present invention may be added to the rubber by any conventional technique such as on a mill or in a Banbury. The amount of the mixture may vary widely depending on the type of rubber and other compounds present in the vulcanizable composition. Generally, the amount of the mixture that is used ranges from about .05 to about 10.0 phr, with a range of .1 to about 5.0 phr being preferred. The mixture is preferably added in the nonproductive stage with the silica and optional sulfur-containing organosilicon coupling agent.

For ease in handling, the mixture of dithiodipropionic acid, trithiodipropionic acid and tetrathiodipropionic acid may be used per se or may be deposited on suitable carriers. Examples of carriers which may be used in the present invention include silica, carbon black, alumina, kieselguhr, silica gel and calcium silicate.

The rubber composition should contain a sufficient amount of silica, and carbon black, if used, to contribute a reasonably high modulus and high resistance to tear. The silica filler may be added in amounts ranging from 10 to 250 phr. Preferably, the silica is present in an amount ranging from 15 to 80 phr. If carbon black is also present, the amount of carbon black, if used, may vary. Generally speaking, the amount of carbon black will vary from 0 to 80 phr. Preferably, the amount of carbon black will range from 0 to 40 phr.

Where the rubber composition contains both silica and carbon black, the weight ratio of silica to carbon black may vary. For example, the weight ratio may be as low as 1:5 to a silica to carbon black weight ratio of 30:1. Preferably, the weight ratio of silica to carbon black ranges from 1:3 to 5:1. The combined weight of the silica and carbon black, as herein referenced, may be as low as about 30 phr, but is preferably from about 45 to about 90 phr.

The commonly employed siliceous pigments used in rubber compounding applications can be used as the silica in this invention, including pyrogenic and precipitated siliceous pigments (silica), although precipitate silicas are preferred. The siliceous pigments preferably employed in this invention are precipitated silicas such as, for example, those obtained by the acidification of a soluble silicate, e.g., sodium silicate.

Such silicas might be characterized, for example, by having a BET surface area, as measured using nitrogen gas, preferably in the range of about 40 to about 600, and more usually in a range of about 50 to about 300 square meters per gram. The BET method of measuring surface area is described in the Journal of the American Chemical Society, Volume 60, page 304 (1930).

The silica may also be typically characterized by having a dibutylphthalate (DBP) absorption value in a range of about 100 to about 400, and more usually about 150 to about 300.

The silica might be expected to have an average ultimate particle size, for example, in the range of 0.01 to 0.05 micron as determined by the electron microscope, although the silica particles may be even smaller, or possibly larger, in size.

Various commercially available silicas may be considered for use in this invention such as, only for example herein, and without limitation, silicas commercially available from PPG Industries under the Hi-Sil trademark with designations 210, 243, etc; silicas available from Rhone-Poulenc, with, for example, designations of Z1165MP and Z165GR and silicas available from Degussa AG with, for example, designations VN2 and VN3, etc.

Whereas the mixture of dithiodipropionic acid, trithiodipropionic acid and tetrathiodipropionic acid function as a silica coupling agent, the processing of the sulfur vulcanizable rubber may be conducted in the presence of a sulfur containing organosilicon compound. Examples of suitable sulfur containing organosilicon compounds are of the formula:

Z-Alk-Sₙ-Alk-Z (I)

in which Z is selected from the group consisting of 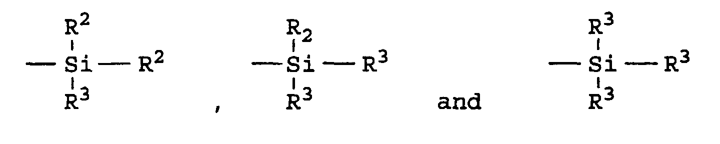 where R² is an alkyl group of 1 to 4 carbon atoms, cyclohexyl or phenyl;
R³ is alkoxy of 1 to 8 carbon atoms, or cycloalkoxy of 5 to 8 carbon atoms;
Alk is a divalent hydrocarbon of 1 to 18 carbon atoms and n is an integer of 2 to 8.

Specific examples of sulfur containing organosilicon compounds which may be used in accordance with the present invention include: 3,3'-bis(trimethoxysilylpropyl) disulfide, 3,3'-bis(triethoxysilylpropyl) tetrasulfide, 3,3'-bis(triethoxysilylpropyl) octasulfide, 3,3'-bis(trimethoxysilylpropyl) tetrasulfide, 2,2'-bis(triethoxysilylethyl) tetrasulfide, 3,3'-bis(trimethoxysilylpropyl) trisulfide, 3,3'-bis(triethoxysilylpropyl) trisulfide, 3,3'-bis(tributoxysilylpropyl) disulfide, 3,3'-bis(trimethoxysilylpropyl) hexasulfide, 3,3'-bis(trimethoxysilylpropyl) octasulfide, 3,3'-bis(trioctoxysilylpropyl) tetrasulfide, 3,3'-bis(trihexoxysilylpropyl) disulfide, 3,3'-bis(tri-2''-ethylhexoxysilylpropyl) trisulfide, 3,3'-bis(triisooctoxysilylpropyl) tetrasulfide, 3,3'-bis(tri-t-butoxysilylpropyl) disulfide, 2,2'-bis(methoxy diethoxy silyl ethyl) tetrasulfide, 2,2'-bis(tripropoxysilylethyl) pentasulfide, 3,3'-bis(tricyclonexoxysilylpropyl) tetrasulfide, 3,3'-bis(tricyclopentoxysilylpropyl) trisulfide, 2,2'-bis(tri-2''-methylcyclohexoxysilylethyl) tetrasulfide, bis(trimethoxysilylmethyl) tetrasulfide, 3-methoxy ethoxy propoxysilyl 3'-diethoxybutoxysilylpropyltetrasulfide, 2,2'-bis(dimethyl methoxysilylethyl) disulfide, 2,2'-bis(dimethyl sec.butoxysilylethyl) trisulfide, 3,3'-bis(methyl butylethoxysilylpropyl) tetrasulfide, 3,3'-bis(di t-butylmethoxysilylpropyl) tetrasulfide, 2,2'-bis(phenyl methyl methoxysilylethyl) trisulfide, 3,3'-bis(diphenyl isopropoxysilylpropyl) tetrasulfide, 3,3'-bis(diphenyl cyclohexoxysilylpropyl) disulfide, 3,3'-bis(dimethyl ethylmercaptosilylpropyl) tetrasulfide, 2,2'-bis(methyl dimethoxysilylethyl) trisulfide, 2,2'-bis(methyl ethoxypropoxysilylethyl) tetrasulfide, 3,3'-bis(diethyl methoxysilylpropyl) tetrasulfide, 3,3'-bis(ethyl di-sec. butoxysilylpropyl) disulfide, 3,3'-bis(propyl diethoxysilylpropyl) disulfide, 3,3'-bis(butyl dimethoxysilylpropyl) trisulfide, 3,3'-bis(phenyl dimethoxysilylpropyl) tetrasulfide, 3-phenyl ethoxybutoxysilyl 3'-trimethoxysilylpropyl tetrasulfide, 4,4'-bis(trimethoxysilylbutyl) tetrasulfide, 6,6'-bis(triethoxysilylhexyl) tetrasulfide, 12,12'-bis(triisopropoxysilyl dodecyl) disulfide, 18,18'-bis(trimethoxysilyloctadecyl) tetrasulfide, 18,18'-bis(tripropoxysilyloctadecenyl) tetrasulfide, 4,4'-bis(trimethoxysilyl-buten-2-yl) tetrasulfide, 4,4'-bis(trimethoxysilylcyclohexylene) tetrasulfide, 5,5'-bis(dimethoxymethylsilylpentyl) trisulfide, 3,3'-bis(trimethoxysilyl-2-methylpropyl) tetrasulfide, 3,3'-bis(dimethoxyphenylsilyl-2-methylpropyl) disulfide.

The preferred sulfur containing organosilicon compounds are the 3,3'-bis(trimethoxy or triethoxy silylpropyl) sulfides. The most preferred compound is 3,3'-bis(triethoxysilylpropyl) tetrasulfide. Therefore as to formula I, preferably Z is 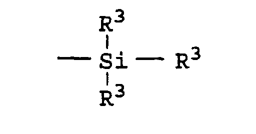 where R³ is an alkoxy of 2 to 4 carbon atoms, with 2 carbon atoms being particularly preferred; Alk is a divalent hydrocarbon of 2 to 4 carbon atoms with 3 carbon atoms being particularly preferred; and n is an integer of from 3 to 5 with 4 being particularly preferred.

The amount of the sulfur containing organosilicon compound of formula I in a rubber composition will vary depending on the level of silica that is used. Generally speaking, the amount of the compound of formula I, if used, will range from .01 to 1.0 parts by weight per part by weight of the silica. Preferably, the amount will range from .05 to 0.4 parts by weight per part by weight of the silica.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur vulcanized material (rubbers), the additives mentioned above are selected and commonly used in conventional amounts. Typical amounts of reinforcing type carbon blacks(s), for this invention, if used, are herein set forth. Representative examples of sulfur donors include elemental sulfur (free sulfur), an amine disulfide, polymeric polysulfide and sulfur olefin adducts. Preferably, the sulfur vulcanizing agent is elemental sulfur. The sulfur vulcanizing agent may be used in an amount ranging from 0.5 to 8 phr, with a range of from 1.5 to 6 phr being preferred. Typical amounts of tackifier resins, if used, comprise about 0.5 to about 10 phr, usually about 1 to about 5 phr. Typical amounts of processing aids comprise about 1 to about 50 phr. Such processing aids can include, for example, aromatic, napthenic, and/or paraffinic processing oils. Typical amounts of antioxidants comprise about 1 to about 5 phr. Representative antioxidants may be, for example, diphenyl-p-phenylenediamine and others, such as, for example, those disclosed in the Vanderbilt Rubber Handbook (1978), pages 344-346. Typical amounts of antiozonants comprise about 1 to 5 phr. Typical amounts of fatty acids, if used, which can include stearic acid comprise about 0.5 to about 3 phr. Typical amounts of zinc oxide comprise about 2 to about 5 phr. Typical amounts of waxes comprise about 1 to about 5 phr. Often microcrystalline waxes are used. Typical amounts of peptizers comprise about 0.1 to about 1 phr. Typical peptizers may be, for example, pentachlorothiophenol and dibenzamidodiphenyl disulfide.

In one aspect of the present invention, the sulfur vulcanizable rubber composition is then sulfur-cured or vulcanized.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from about 0.5 to about 4, preferably about 0.8 to about 2.0 phr. In another embodiment, combinations of a primary and a secondary accelerator might be used with the secondary accelerator being used in smaller amounts, such as from about 0.05 to about 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The rubber compositions of the present invention may contain a methylene donor and a methylene acceptor. The term "methylene donor" is intended to mean a compound capable of reacting with a methylene accepted (such as resorcinol or its equivalent containing a present hydroxyl group) and generate the resin in-situ. Examples of methylene donors which are suitable for use in the present invention include hexamethylenetetramine, hexaethoxymethylmelamine, hexamethoxymethylmelamine, lauryloxymethylpyridinium chloride, ethoxymethylpyridinium chloride, trioxan hexamethoxymethylmelamine, the hydroxy groups of which may be esterified or partly esterified, and polymers of formaldehyde such as paraformaldehyde. In addition, the methylene donors may be N-substituted oxymethylmelamines, of the general formula: 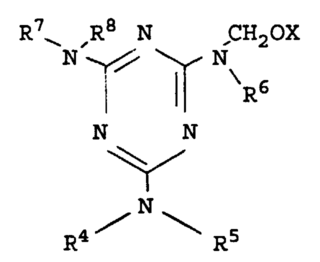 wherein X is an alkyl having from 1 to 8 carbon atoms, R⁴, R⁵, R⁶, R⁷ and R⁸ are individually selected from the group consisting of hydrogen, an alkyl having from 1 to 8 carbon atoms and the group -CH₂OX. Specific methylene donors include hexakis(methoxymethyl)melamine, N,N',N''-trimethyl/N,N',N''-trimethylolmelamine, hexamethylolmelamine, N,N',N''-dimethylolmelamine, N-methylolmelamine, N,N'-dimethylolmelamine, N,N',N''-tris(methoxymethyl)melamine and N,N'N''-tributyl-N,N',N''-trimethylol-melamine. The N-methylol derivatives of melamine are prepared by known methods.

The amount of methylene donor and methylene acceptor that is present in the rubber stock may vary. Typically, the amount of methylene donor and methylene acceptor that each is present will range from about 0.1 phr to 10.0 phr. Preferably, the amount of methylene donor and methylene acceptor that each is present ranges from about 2.0 phr to 5.0 phr.

The weight ratio of methylene donor to the methylene acceptor may vary. Generally speaking, the weight ratio will range from about 1:10 to about 10:1. Preferably, the weight ratio ranges from about 1:3 to 3:1.

The mixing of the rubber composition can be accomplished by methods known to those having skill in the rubber mixing art. For example the ingredients are typically mixed in at least two stages, namely at least one non-productive stage followed by a productive mix stage. The final curatives including sulfur vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber, silica, mixture of dithiodipropionic acid, trithiodipropionic acid and tetrathiodipropionic acid and carbon black, if used, are mixed in one or more non-productive mix stages. The terms "non-productive" and "productive" mix stages are well known to those having skill in the rubber mixing art. The sulfur vulcanizable rubber composition containing the mixture of dithiodipropionic acid, trithiodipropionic acid and tetrathiodipropionic acid, vulcanizable rubber and generally at least part of the silica should, as well as the sulfur-containing organosilicon compound, if used, be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions and the volume and nature of the components. For example, the thermomechanical working may be from 1 to 20 minutes.

Vulcanization of the rubber composition of the present invention is generally carried out at conventional temperatures ranging from about 100°C to 200°C. Preferably, the vulcanization is conducted at temperatures ranging from about 110°C to 180°C. Any of the usual vulcanization processes may be used such as heating in a press or mold, heating with superheated steam or hot air or in a salt bath.

Upon vulcanization of the sulfur vulcanized composition, the rubber composition of this invention can be used for various purposes. For example, the sulfur vulcanized rubber composition may be in the form of a tire, belt or hose. In case of a tire, it can be used for various tire components. Such tires can be built, shaped, molded and cured by various methods which are known and will be readily apparent to those having skill in such art. Preferably, the rubber composition is used in the tread of a tire. As can be appreciated, the tire may be a passenger tire, aircraft tire, truck tire and the like. Preferably, the tire is a passenger tire. The tire may also be a radial or bias, with a radial tire being preferred.

The invention may be better understood by reference to the following examples in which the parts and percentages are by weight unless otherwise indicated.

The following examples are presented in order to illustrate but not limit the present invention.

Cure properties were determined using a Monsanto oscillating disc rheometer which was operated at a temperature of 150°C and at a frequency of 11 hertz. A description of oscillating disc rheometers can be found in the Vanderbilt Rubber Handbook edited by Robert O. Ohm (Norwalk, Conn., R. T. Vanderbilt Company, Inc., 1990), pages 554-557. The use of this cure meter and standardized values read from the curve are specified in ASTM D-2084. A typical cure curve obtained on an oscillating disc rheometer is shown on page 555 of the 1990 edition of the Vanderbilt Rubber Handbook.

In such an oscillating disc rheometer, compounded rubber samples are subjected to an oscillating shearing action of constant amplitude. The torque of the oscillating disc embedded in the stock that is being tested that is required to oscillate the rotor at the vulcanization temperature is measured. The values obtained using this cure test are very significant since changes in the rubber or the compounding recipe are very readily detected. It is obvious that it is normally advantageous to have a fast cure rate.

The invention may be better understood by reference to the following examples in which the parts and percentages are by weight unless otherwise indicated.

### EXAMPLE I

### Preparation of a Mixture of Dithiodipropionic Acid, Trithiodipropionic Acid and Tetrathiodipropionic Acid

A 3-liter round-bottom flask was charged with 44 g (1.38 moles) of sulfur, 110g (0.45 moles) of sodium sulfide nonahydrate and 900 ml of distilled water. The flask was swept with nitrogen and heated with stirring to 90°C to give a polysulfide solution. A separate reaction was carried out in a 4-liter beaker where 77.3 g (0.93 mole) of sodium hydrogen carbonate was charged with 500 ml of distilled water, and 100 g (0.92 mole) of 3-chloropropionic acid was also added in small portions as carbon dioxide was evolved. The solution of the 3-chloropropionic acid salt was then slowly charged into the 85-90°C solution of polysulfide with stirring. The temperature was maintained at 85-90°C during the 1/2 hour addition time. The flask was slowly cooled to room temperature (about 1/2 hour) with stirring. 24 g of a yellow precipitate of sulfur was removed from the aqueous 3-chloropropionic acid salt solution by suction filtering. The resulting clear aqueous solution was titrated to a pH of about 6 with the slow addition of hydrochloric acid to give a white product that was suction-filtered and vacuum-dried at 60°C. 107 g of a white powder melting at 90°C was recovered. Small molecule GPC and mass spectrometry analysis showed the white powder to be a mixture of di-, tri- and tetrathiodipropionic acids. The respective percentages by weight of the components were 69.7 percent dithiodipropionic acid, 18.1 percent trithiodipropionic acid and 12.2 percent tetrathiodipropionic acid.

### EXAMPLE II

In this example, the mixture of dithiodipropionic acid, trithiodipropionic acid and tetrathiodipropionic acid prepared in Example 1 is evaluated in comparison with a commercially-available silica coupling agent, namely, bis-(3-triethoxysilylpropyl)tetrasulfide.

Rubber compositions containing the materials set out in Tables 1 and 2 were prepared in a BR Banbury™ mixer using three separate stages of addition (mixing), namely, two non-productive mix stages and one productive mix stage. The first nonproductive was mixed until a period of 4 minutes or a rubber temperature of 160°C was reached. The second nonproductive was mixed for 7 minutes at 160°C. The productive was mixed for 2 minutes until a dump temperature of 120°C was reached.

The rubber compositions are identified herein as Samples 1-3. Samples 1 and 2 are considered herein as being controls without the use of a mixture of dithiodipropionic acid, trithiodipropionic acid and tetrathiodipropionic acid.

The samples were cured at about 150°C for about 18 minutes.

Table 2 illustrates the behavior and physical properties of the cured samples 1-3.

It is clearly evident from the results that the use of mixture of dithiodipropionic acid, trithiodipropionic acid and tetrathiodipropionic acid results in higher modulus, higher hardness properties and lower Din abrasion values than the controls.

**Table 1**

| | Ex. 1 | Ex. 2 | Ex. 3 |
|---|---|---|---|
| | | | |

| First Non-Productive | | | |
|---|---|---|---|
| Polyisoprene¹ | 100 | 100 | 100 |
| Carbon Black | 35 | 35 | 35 |
| Processing Oil | 5 | 5 | 5 |
| Zinc Oxide | 5 | 5 | 5 |
| Fatty Acid | 2 | 2 | 2 |
| Antioxidant² | 2 | 2 | 2 |

| Second Non-Productive | | | |
|---|---|---|---|
| 1st Non-Productive | 149 | 149 | 149 |
| Silica³ | 15 | 15 | 15 |
| Silane Coupling Agent⁴ | 0 | 3 | 0 |
| Acid Mixture of Ex. 1 | 0 | 0 | 2 |

| Productive | | | |
|---|---|---|---|
| Second Non-Productive | 164 | 167 | 167 |
| Sulfur | 1.4 | 1.4 | 1.4 |
| Accelerator⁵ | 1 | 1 | 1 |

| | | | |
|---|---|---|---|
| ¹Synthetic cis 1,4-polyisoprene which is commercially available from The Goodyear Tire & Rubber Company under the designation Natsyn® 2200 | | | |
| ²Polymerized 1,2-dihydro 2,2,4-trimethylquinoline type | | | |
| ³Precipitated silica which is commercially available from the PPG Company under the designation Hil Sil™ 210 | | | |
| ⁴Obtained as bis-(3-triethoxysilylpropyl) tetrasulfide, which is commercially available as X50S from Degussa Gmbh and is provided in a 50/50 by weight blend with carbon black. | | | |
| ⁵Sulfenamide type | | | |

**Table 2**

| Samples | 1 | 2 | 3 |
|---|---|---|---|
| bis-(3-triethoxysilylpropyl) tetrasulfide (50% active) | 0 | 3 | 0 |
| Acid Mixture of Ex. 1 | 0 | 0 | 2 |

| Rheometer (150°C) | | | |
|---|---|---|---|
| Max Torque | 30 | 35 | 39.6 |
| Min Torque | 6.4 | 6.0 | 6.8 |
| Delta Torque | 23.6 | 29.0 | 32.8 |
| T₂₅ (minutes) | 15.8 | 12.0 | 13.8 |
| T₉₀ (minutes) | 21.5 | 18.3 | 23.0 |
| Rev, 60'* | 3.0 | 1.0 | 0.1 |

| Stress Strain | | | |
|---|---|---|---|
| Tensile Strength (MPa) | 18.5 | 20.6 | 21.4 |
| Elongation @ Break (%) | 672 | 593 | 572 |
| 100% Modulus (MPa) | 1.16 | 1.80 | 2.16 |
| 300% Modulus (MPa) | 5.18 | 8.73 | 9.41 |
| 300% Modulus/100% Modulus | 4.46 | 4.85 | 4.36 |

| Rebound | | | |
|---|---|---|---|
| Room Temperature (%) | 45.4 | 47.9 | 50.2 |
| 100°C (%) | 56.9 | 60.9 | 61.5 |

| Hardness | | | |
|---|---|---|---|
| Room Temperature | 50.5 | 57.7 | 63.0 |
| 100°C | 47.3 | 55.3 | 59.2 |

| Rheovibron | | | |
|---|---|---|---|
| E' @ 60°C (MPa) | 11.0 | 14.7 | 17.9 |
| Tan Delta @ 60°C | .109 | .088 | .075 |

| Din Abrasion | | | |
|---|---|---|---|
| Din Abrasion | 224 | 146 | 130 |

| | | | |
|---|---|---|---|
| *Difference in final torque units and maximum torque achieved in 60 minutes. | | | |

### EXAMPLE III

### (Control)

In this example, dithiodipropionic acid is evaluated in comparison with the commercially available coupling agent used in Sample 2 of Example II.

Rubber compositions containing the materials set out in Tables 3 and 4 were prepared in a BR Banbury™ mixer using three separate stages of addition (mixing), namely, two separate non-productive mix stages and one productive mix stage. The mixing time and rubber temperatures for the various stages were the same as used in Example II.

All three samples are considered herein as controls; however, were prepared in order for a relative comparison to be made between the use of a mixture of dithiodipropionic acid, trithiodipropionic acid and tetrathiodipropionic acid (Sample 3 of Example II) versus use of dithiodipropionic acid alone (Sample 6 of Example III). Other than these additives, the processing conditions and materials for all samples of Example II and Example III are the same, namely Sample 1 of Example II is the same as Sample 4 of Example III and Sample 2 of Example II is the same as Sample 5 of Example III.

**Table 3**

| | Ex. 4 | Ex. 5 | Ex. 6 |
|---|---|---|---|
| | | | |

| First Non-Productive | | | |
|---|---|---|---|
| Polyisoprene¹ | 100 | 100 | 100 |
| Carbon Black | 35 | 35 | 35 |
| Processing Oil | 5 | 5 | 5 |
| Zinc Oxide | 5 | 5 | 5 |
| Fatty Acid | 2 | 2 | 2 |
| Antioxidant² | 2 | 2 | 2 |

| Second Non-Productive | | | |
|---|---|---|---|
| 1st Non-Productive | 149 | 149 | 149 |
| Silica³ | 15 | 15 | 15 |
| Silane Coupling Agent⁴ | 0 | 3 | 0 |
| Dithiodipropionic Acid | 0 | 0 | 2 |

| Productive | | | |
|---|---|---|---|
| Second Non-Productive | 164 | 167 | 167 |
| Sulfur | 1.4 | 1.4 | 1.4 |
| Accelerator⁵ | 1 | 1 | 1 |

| | | | |
|---|---|---|---|
| ¹Synthetic cis 1,4-polyisoprene which is commercially available from The Goodyear Tire & Rubber Company under the designation Natsyn® 2200 | | | |
| ²Polymerized 1,2-dehydro 2,2,4-trimethylquinoline type | | | |
| ³Precipitated silica which is commercially available from the PPG Company under the designation Hil Sil™ 210 | | | |
| ⁴Obtained as bis-(3-triethoxysilylpropyl) tetrasulfide, which is commercially available as X50S from Degussa Gmbh and is provided in a 50/50 by weight blend with carbon black. | | | |
| ⁵Sulfenamide type | | | |

**Table 4**

| Samples | 4 | 5 | 6 |
|---|---|---|---|
| bis-(3-triethoxysilylpropyl) tetrasulfide (50% active) | 0 | 3 | 0 |
| Dithiodipropionic Acid | 0 | 0 | 2 |

| Rheometer (150°C) | | | |
|---|---|---|---|
| Max Torque | 26.0 | 33.0 | 35.2 |
| Min Torque | 4.0 | 5.0 | 7.0 |
| Delta Torque | 22.0 | 28.0 | 28.2 |
| T₂₅ (minutes) | 16.8 | 13.3 | 16.8 |
| T₉₀ (minutes) | 22.3 | 18.8 | 28.0 |
| Rev, 60'* | 3.0 | 1.2 | 0 |

| Stress Strain | | | |
|---|---|---|---|
| Tensile Strength (MPa) | 14.3 | 19.1 | 21.7 |
| Elongation @ Break (%) | 632 | 624 | 608 |
| 100% Modulus (MPa) | 1.10 | 1.67 | 2.21 |
| 300% Modulus (MPa) | 4.53 | 7.55 | 9.18 |
| 300% Modulus/100% Modulus | 4.12 | 4.52 | 4.15 |

| Rebound | | | |
|---|---|---|---|
| Room Temperature (%) | 42.1 | 45.6 | 48.9 |
| 100°C (%) | 51.7 | 57.9 | 60.1 |

| Hardness | | | |
|---|---|---|---|
| Room Temperature | 49.8 | 56.7 | 64.7 |
| 100°C | 43.8 | 52.6 | 58.7 |

| Rheovibron | | | |
|---|---|---|---|
| E' @ 60°C (MPa) | 8.2 | 10.9 | 18.9 |
| Tan Delta @ 60°C | .115 | .096 | .076 |

| Din Abrasion | | | |
|---|---|---|---|
| Din Abrasion | 254 | 130 | 148 |

| | | | |
|---|---|---|---|
| *Difference in final torque units and maximum torque achieved in 60 minutes. | | | |

As can be seen from Sample 3 of Example II, the use of a mixture of dithiodipropionic acid, trithiodipropionic acid and tetrathiodipropionic acid resulted in lower Din abrasion values (lower is better) compared with the silane coupler (Sample 2). However, use of dithiodipropionic acid alone (Sample 6 of Example III) results in higher Din abrasion values compared with the silane coupler (Sample 5).

While certain representative embodiments and details have been shown for the purpose of illustrating the invention, it will be apparent to those skilled in this art that various changes and modifications may be made therein without departing from the spirit or scope of the invention.

## Claims

1. A method of improving the physical properties of a silica-filled rubber composition which comprises mixing
(i) 100 parts by weight of at least one sulfur vulcanizable elastomer selected from conjugated diene homopolymers and copolymers, natural rubber and from copolymers of at least one conjugated diene and aromatic vinyl compound and
(ii) 10 to 250 phr of silica with
(iii) .05 to 10 phr of a mixture of dithiodipropionic acid, trithiodipropionic acid and tetrathiodipropionic acid.

2. The method of claim 1 wherein said mixture comprises
(i) from 50 to 80 percent by weight of dithiodipropionic acid,
(ii) from 10 to 30 percent by weight of trithiodipropionic acid, and
(iii) from 5 to 20 percent by weight of tetrathiodipropionic acid.

3. The method of claim 1 wherein the rubber composition is thermomechanically mixed at a rubber temperature in a range of from 140°C to 190°C for a mixing time of from 1 to 20 minutes.

4. The method of claim 1 wherein said sulfur vulcanizable elastomer contains olefinic unsaturation and is selected from the group consisting of natural rubber, neoprene, polyisoprene, butyl rubber, polybutadiene, styrene-butadiene copolymer, styrene/isoprene/butadiene rubber, methyl methacrylate-butadiene copolymer, isoprene-styrene copolymer, methyl methacrylate-isoprene copolymer, acrylonitrile-isoprene copolymer, acrylonitrile-butadiene copolymer, EPDM and mixtures thereof.

5. A sulfur-vulcanizable rubber composition characterized by a sulfur-vulcanizable elastomer, silica and a mixture of dithiodipropionic acid, trithiodipropionic acid and tetrathiodipropionic acid.

6. The composition of claim 5 characterized in that said mixture of dithiodipropionic acid, trithiodipropionic acid and tetrathiodipropionic acid is present in an amount ranging from .05 to 10.0 phr.

7. The composition of claim 5 characterized in that said mixture of dithiodipropionic acid, trithiodipropionic acid and tetrathiodipropionic acid comprises
(i) from 50 to 80 percent by weight of dithiodipropionic acid,
(ii) from 10 to 30 percent by weight of trithiodipropionic acid and
(iii) from 5 to 20 percent by weight of tetrathiodipropionic acid

8. The composition of claim 5 characterized in that said rubber composition is thermomechanically mixed at a rubber temperature in a range of from 140°C to 190°C for a mixing time of from 1 to 20 minutes.

9. The composition of claim 5 characterized in that said silica is present in an amount ranging from 10 to 250 phr.

10. The composition of claim 5 characterized in that said sulfur-vulcanizable elastomer is selected from conjugated diene homopolymers and copolymers, natural rubber and copolymers of at least one conjugated diene and aromatic vinyl compound.

11. A sulfur vulcanized rubber composition which is characterized by being prepared by heating the composition of claim 5 to a temperature ranging from 100°C to 200°C in the presence of a sulfur vulcanizing agent.

12. The sulfur vulcanized rubber composition of claim 11 in the form of a tire, belt or hose.

13. A tire having a tread comprised of the composition of claim 11.
